# EUROPEAN PATENT SPECIFICATION

(11) **EP 0 906 321 B1**
(45) Date of publication and mention of the grant of the patent: **09.04.2003**
(21) Application number: 97924036.3
(22) Date of filing: 27.05.1997
(51) Int. Cl.: C07F 9/00, C07F 11/00, C07F 7/00, C07F 19/00, C08F 4/64

(54) **NOVEL TRANSITION METAL COMPLEXES AND METHOD FOR PREPARING THEM**
NEUE ÜBERGANSMETALL-KOMPLEXVERBINDUNGEN UND VERFAHREN ZU IHRER HERSTELLUNG
NOUVEAUX COMPLEXES DE METAUX DE TRANSITION ET LEUR PROCEDE DE PREPARATION

(30) Priority: 31.05.1996 FI 962292
(43) Date of publication of application: 07.04.1999
(73) Proprietor: Borealis Technology Oy, 06101 Porvoo (FI)
(72) Inventor: POLAMO, Mika, FIN-04400 Järvenpää (FI); LESKELÄ, Markku, FIN-02130 Espoo (FI); HAKALA, Kimmo, FIN-00210 Helsinki (FI); LÖFGREN, Barbro, FIN-00930 Helsinki (FI)
(74) Representative: Cockbain, Julian, Dr.
(86) International application number: FI9700321
(87) International publication number: WO97045434

(56) References cited:
- EP-A- 0 687 693
- US-A- 4 169 092
- INORG. CHEM., Volume 35, April 1996, RHETT KEMPE et al., "Mononuclear Titanium Complexes that Contain Aminopyridinato Ligands", pages 2644-2649.
- INDIAN J. CHEM., Volume 16A, November 1978, K.P. SRIVASTAVA et al., "Chelates of Molybdenum Dioxydichloride with Substituted Thioureas & Ureas", pages 990-992.
- NAT. ACAD. SCI. LETTERS, Volume 8, No. 11, 1985, KANTI MISHRA et al., "Characterisation of Mixed Ligand Complexes of Cr(III) with Thiocyanate and 2-aminopyridine/8-hydroxy Quinoline", pages 347-350.
- SYNTH. REACT. INORG. MET.-ORG. CHEM., Volume 23, No. 7, 1993, R.C. MAURYA et al., "Synthesis and Characterization of Some Novel Mixed-Ligand Cyanonitrosyl (Mo(NO)2)6 Complexes of Molybdenum with Some Simple and Biologically Active Organic Donors" pages 1073-1085.
- UKRAINSKII KHIMICHESKII ZHURNAL, Volume 39, No. 11, 1973, A.T. PILIPENKO et al., "A Spectrophotometric Study of Complexing in the Molybdenum-2-benzylaminopyridine-thiocyanate System", pages 1169-1173.
- UKRAINSKII KHIMICHESKII ZHURNAL, Volume 39, No. 11, 1973, A.T. PILIPENKO et al., "A Spectrophotometric Study of Complexing in the Molybdenum-2-benzylaminopyridine-thiocyanat e System", pages 1169-1173.

## Description

The present invention deals with new complexes of transition metals and a method for preparing them. The invention concerns also a catalyst system of transition metal complexes for polymerizing ethylenically unsaturated monomers. Further the invention concerns a method for homo or copolymerizing ethylenically unsaturated monomers in the presence of a catalyst system comprising a transition metal complex and an organometallic compound.

Olefin polymerization with Ziegler-Natta catalysts has been used for a long time. These catalysts are based on complex systems of organoaluminium compounds and at least one transition metal compound, especially titanium. Ziegler-Natta catalysts are very sensitive to catalyst poisons, especially for oxygen and water. The structure of the real catalyst is at least partly still unknown. Based on the wide molecular weight distribution of the produced polymers, it has been proposed that the traditional Z-N catalysts contain several, structurally different active sites (see G. Fink, R. Mülhaupt and H.H. Brintzinger, editors in Ziegler-Catalysts, Springer-Verlag, Berlin Heidelberg, 1995).

Recently catalysts based on metallocene compounds and alumoxane compounds have been developed. In these catalysts a transition metal atom, normally zirconium, hafnium or titanium is sandwiched between parallel planar cyclopentadienyl groups. The activity of metallocenes is greatly improved by stabilizing with a bulky non-coordinating MAO anion. Operating in the presence of these catalysts polymers having a narrow molecular weight distribution with improved yield can be obtained. Metallocene catalysts are extremely active. They are structurally well characterized and typical for them is that they contain a single active center which results in very homogenous polymer. This can be seen as narrow molecular weight distribution. (see M. Bochmann, J. Chem. Soc. Dalton. Trans., 1996,225).

Inorg.Chem., vol 35, April 1996, pp 2644-2649 discloses the chemistry of certain specific amidopyridine derivatives. The said document is silent of any catalytical properties of the compounds.

Some aminopyridine complexes have been disclosed in Nat.Acad.Sci.Letters, vol 8(11), 1985, pp 347-350, in Ukrainskii Khimicheskii Zhurnal, vol 39(11), 1973, pp 1169-1173, in Indian J. Chem., vol 16A, 1978, pp 990-992, and in Synth.React.Inorg.Met.-Org.Chem., vol 23(7), 1993, pp 1073-1085.

EP-A-687 693 and US-A-4 169 092 describe structurally very specific complexes, namely amidinato complexes useful as a polymerisation catalyst and, respectively, naphthyridine complexes useful as a pigment in oil based paint or useful as a catalyst for the polymerisation of vinyl chloride or 1,3-butadiene.

European patent application 0687693 discloses amidinato complexes, which have allylically connected resonance structures and perform high molecular weight distribution with moderate activity in olefin polymerization.

The purpose of the present invention is to find new alternative complex systems, which are more active in the polymerization or copolymerization of olefins and other monomers than conventional Ziegler-Natta catalysts. The new complexes also have advantages of metallocenes, especially single active site. The purpose of the invention is also a transition metal complex which can be prepared by a method which is very easy and economical. Still another purpose of the invention is a catalyst system comprising a novel transition metal complex and an activator compound for polymerization of ethylenically unsaturated monomers, especially alfaolefins.

According to the present invention it has been found that amidopyridine ligands offer an electronically and sterically rigid structure with heterocyclic Π-donor and amido bond without coordination of conjugated double bonds seen in the known metallocene complexes and amidinato complexes according to EP687693. The complexes according to the invention differ significantly from the previously patented ones both structurally and in catalytic performance producing polymers with a very narrow molecular weight distribution and good activity.

The invention concerns a catalyst system for homo or copolymerizing ethylenically unsaturated monomers characterized in that it comprises
A) a transition metal complex having a general formula (I)

   M(RNPy)_{Y}X_{Z} (I)

   where
   M is a transition metal selected from groups IVb-VIb of The Periodic Chart of the Elements,
   RNpy is unsubstituted or substituted amidopyridine derivative,
   X is a ligand having a valency of 1, and
   y is 1-4, z is 0-5 and y+z is 3-6, and
(B) an acceptor compound for component X as an activator.

Transition metal M can be selected from Ti, Zr, Hf, V, Nb, Ta, Cr, Mo or W.

The complexes of general formula (I) can be presented also by a general formula of (II) : 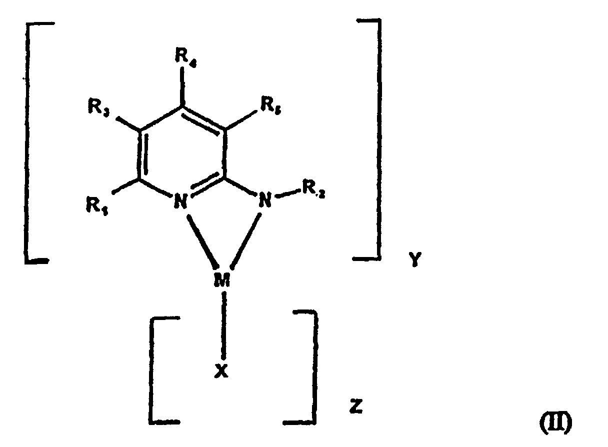 where
R₂ is selected from hydrogen or linear, branched or cyclic C₁-C₂₅ alkyl group or cyclic C₁-C₇ alkylene group connected to groups R₁, R₃, R₄, or R₅ as defined below, or silyl alkyl SiRR'R" or boron alkyl BRR' where R, R' and R" are as defined for R₁, R₃, R₄ and R₅
R₁, R₃, B₄ and R₅ are same or different groups selected from hydrogen, linear, branched or cyclic C₁-C₂₅ alkyl group, or a cyclic C₁-C₇ alkylene group connected to R₁, R₂, R₃, R₄, or R₅, or substituted main group element (B, C, Si, N, 0, P, As, Sb, Pb..) with a substituent as R₁-R₅,
M is a transition metal selected from Ti, Zr, Hf, V, Nb, Ta, Mo, Cr or W,
X groups are independently halide and/or oxo group or alkyl as R₂, or -NRR' where R and R' are as R₂, and X can also act as a bridge between two or more M(RNpy)_{y}X_{z-1} units, and
y is 1-4 and z is 0-5 and y+z is 3-6.

Preferably X is halide, such as chloride, bromide, iodine or fluoride, or methyl or ethyl group. In the case of V, Mo, W it can be an oxo group.

Typical examples of compounds according to formula (I) are the following compounds, where Py= pyridine (pyridyl), Bz= benzyl and Ph= phenyl:
2-(phenylamino)pyridiniumtetrachloro-2-(phenylamido)pyridine titanate(IV) [PhNHPyH] [TiCl₄ (PhNPy)],
di-µ-chlorodichlorotetrakis[2-(phenylamido)pyridine)]dizirconium(IV) [Zr₂Cl₄(PhNPy)₄],
tetrakis[2-(phenylamido)pyridine]hafnium(IV) [Hf(PhNPy)₄],
trichlorobis[2-(phenylamidopyridine)]niobium(V) [NbCl₃(PhNPy)₂],
bis[2-(benzylamido)pyridine]trichloroniobium(V) [NbCl₃(PyNBz)₂],
trichlorobis[2-(phenylamido)pyridine]tantalum(V) [TaCl₃(PhNPy)₂],
trichlorobis(2-phenylamido-6-phenylaminopyridine-N,N') tantalum(V) [TaCl₃(PhNPyNHPh)₂],
bis[2-(benzylamido)-4-methylpyridine]trichloro tantalum(V) [TaCl₃(PyNBz)₂],
bis [2- (benzylamido) -4-methylpyridine]trichloro tantalum (V) [TaCl₃(4-MePyNBz)₂], and
trichloro-2-(phenylamido)pyridineoxotungsten( VI) [WCl₃O(PhNPy)].

The complexes above may be prepared by reacting 2-(phenylamino)pyridine or 2-(benzylamino)pyridine with a halide or halide derivative of a transition metal selected from groups IVb-VIb. Preferably the transition metal is selected from Ti, Zr, Hf, V, Nb, Ta, Cr, Mo, or w. The halide is selected from chloride, bromide, iodine or fluoride, preferably chloride.

Preferably the catalyst complexes are prepared by using 2-(phenylamino)pyridine, 2-(benzylamino)pyridine or their derivatives, and halides of transition metals as starting materials. In the preparation method solvents can be used or not used. In the first mentioned case 2-(phenylamido)pyridine is dissolved in a proper solvent. The solution can be cooled down to -70°C - 0°C before contacting with halide. Alternatively the solution can be carried out at room temperature or at higher temperature.

The reaction between the aminopyridine and transition metal halide can carried out at a temperature between 50-150°C or refluxing at the boiling temperature of the solvent. The reaction time can vary from 10 min to 10 hours, preferably 1-3 hours.

As solvents typical aromatic solvents like toluene, benzene or xylene can be used.

The starting materials can be contacted also without solvents by melting them together. The temperature can in this case vary between 50°C and 200°C, preferably however 0-10°C above the melting point of the aminopyridine ligand used. The reaction time is not critical and it can vary between 10 min to 10 hours, preferably between 1 to 3 hours.

During the reaction HCl (gas) or ligand-HCl adducts are developed. These can be removed by extracting with a proper solvent, such as toluene. The catalyst complexes of the invention can be obtained in conventional way, for example by crystallization methods.

The component (B) in the catalyst system for homo or copolymerizing ethylenically unsaturated monomers can be any usable acceptor compound for ligand X in the formulas above. These acceptor compounds are commonly lithium, boron or aluminium organometallic compounds such as alkyl or alkyl halide derivatives or salt containing ammonium or carbo cationic part combined with weakly or non-coordinating anions(s). The anions are commonly carbaboranes, fluoro anions of boron or phosphor or tetraalkyl boron complexes. Preferably (B) is an organometal compound, for example organoaluminium compound. Preferable activators are, for example, alumoxane compounds having the formula of R-(Al(R)-O)ₙ-Al(R)₂, where n is 1-40, m is 3-40 and R is C₁-C₈ alkyl group. Preferably R is methyl and preferable activator is methylalumoxane (MAO). Illustrative, but not limiting examples for component (B) are methylalumoxane, AlClEt₂, PbEt₄, butyllithium and salts containing [CPh₃]⁺ or [NHMe₂PH]⁺ cation and [PF₆]⁻, [BF₄]⁻, nido-carbaborane C₂B₉H₁₃⁻, [B(C₅F₅)]⁻ or [BPh₄]⁻ anion.

The activator can be applied according to the methods known in the art before polymerization or during the polymerization.

The catalysts according to the invention can be used as homogenous systems or they can be deposited on inorganic or organic carrier. Silica, alumina or polymeric carriers like polyethylene or polystyrene can be used as supports.

The catalysts according to the invention are suitable for homo and copolymerization of all olefinic monomers, for example ethylene, propylene, butene, pentene, hexene, 4-methyl-1-pentene or alike. Further they can be used for polymerization of cycloolefins like norbornene and dienes like butadiene, 1-4-hexadiene or 1,5-hexadiene.

The polymerization can be carried out by slurry, gas phase or solution processes either batchwise or continuously. The polymerization conditions are not critical. Thus polymerization temperatures from 0 to 150 C, preferably 50-110 C, and pressures up to 10⁸ Pa (1000 bar) preferably 5.10⁵ - 7.10⁶ Pa (5-70 bar) can be used.

Typical for the polymers according to invention is very narrow molecular weight distribution, which can be seen from the Table, and a good activity better than that of most Ziegler-Natta catalysts and many metallocene based systems.

### Examples

Syntheses of the compounds, which have been characterized with single crystal X-ray analyses.

### Example 1

### 2-(Phenylamino)pyridiniumtetrachloro2-(phenylamido)pyridine titanate(IV) [PhNHPyH][TiCl₄(PhNPy)]

2-(Phenylamino)pyridine was dissolved to toluene (40 ml). Solution was cooled down to -20 °C. Two molar equivalents of titanium(IV) chloride was added. Temperature of the solution was raised to 40 °C in 45 minutes and kept for one hour. The reaction mixture was filtered. Dark red prismatic crystals suitable for single crystal measurements were obtained at room temperature in 15 hours.

### Example 2

### Di-µ-chlorodichlorotetrakis[2-(phenylamido)pyridine)]-dizirconium(IV) [Zr₂Cl₄(PhNPy)₄]

Ligand precursor, 2-(phenylamino)pyridine (9.32 g, 54.8 mmol), was suspended to 100 ml of toluene and cooled down to -50°C. Zirconium(IV)chloride (6.20 g, 26.8 mmol) was added to the suspension. Temperature of the continously stirred suspension was allowed to rise into room temperature in 60 minutes. Mixture which started to turn orange colored was then refluxed for 45 minutes. The orange solution was separated from oily, amorphous like precipitation and filtered. Large orange crystals were obtained in 2 hours. Yield of the crystalline homomorphous material was ca. 10%. Mass spectra: (EI) m/z 500 (ZrCl₂(PhNPy)₂⁺), 463 (ZrCl(PhNPy)₂⁺).

### Example 3

### Tetrakis[2-(phenylamido)pyridine]hafnium(IV) [Hf(PhNPy)₄]

2-(Phenylamino)pyridine (1.92 g, 11.3 mmol) was suspended to 70 ml of toluene and cooled down to -50°C. Hafnium(IV) chloride (0.92 g, 2.9 mmol) was added to the vigorously stirred suspension. Solution slowly turned to pale yellow colour when its temperature was allowed rise to room temperature. Solution was heated 2 hours at 90°C. Solution was filtered and pale yellow prismatic crystals were obtained after 20 hours.

### Example 4

### Trichlorobis[2-(phenylamidopyridine)]niobium(V) [NbCl₃(PhNPy)₂]

2-Phenylaminopyridine (7.30 g, 42.9 mmol) was suspended to 70 ml of toluene. Niobium(V)chloride (3.72 g, 13.8 mmol) was added_to_the_suspension. Solution which rapidly turned to intense purple was heated 60 minutes at 90 °C, 50 ml of toluene was added and solution was stirred 2 hours at room temperature. Again part of the product was amorphous and insoluble in toluene. Solution was filtered and purple prismatic crystals were obtained in 10 hours. Yield 2.3 g (31%). Mass spectra: (EI) m/z 536 (NbCl₃L₂⁺), 367 (NbCl₃L⁺)

### Example 5

### Bis[2-(benzylamido)pyridine]trichloroniobium(V) [NbCl₃(PyNBz)₂]

Niobium(V)chloride, 2.36 g (8.73 mmol) and 2-(benzylamino)pyridine 3.22 g (17.3 mmol) were melt at 100 °C for 30 minutes and extracted to toluene (60 ml) with refluxing for 2 hours. Toluene solution was separated from oily purple-black amorphous residue and filtered. Purple crystals where obtained in 15 hours. Estimated yield was 10-15 %.

### Example 6

### Trichlorobis[2-(phenylamido)pyridine]tantalum(V) [TaCl₃(PhNPy)₂]

2-Phenylaminopyridine (2.88 g, 16.9 mmol) was suspended to 70 ml of toluene and cooled down to -50 °C. Tantalum(V)chloride (3.03 g, 8.46 mmol) was added to the suspension. Temperature of the suspension was raised in 2 hours up to 90°C. At -10°C solution began to change the colour red. After heating 90 minutes the solution was filtered. Dark red crystal started to grow in 12 hours. Yield was 2.9 g (54 %). Mass spectra: (EI) m/z 624 (TaCl₃L₂⁺), 589 (TaCl₂L₂⁺), 457 (TaCl₃L⁺)

### Example 7

### Trichlorobis(2-phenylamido-6-phenylaminopyridine-N,N')tantalum(V) [TaCl₃(PhNPyNHPh)₂]

2,6-bis(phenylamino)pyridine (2.14 g, 8.19 mmol), which was prepared as described previously (M. Hamana, M. Yamazaki, Yakugaki Zasshi, 81, 1961, 574), was dissolved to toluene (40 ml). Solution was cooled down to -20 °C. Tantalum(V) chloride (1.46 g, 4.08 mmol) was added. Temperature of the solution was raised to 40 °C in 45 minutes and kept for one hour. The reaction mixture was filtered. Dark red prismatic crystals suitable for single crystal measurements were obtained at room temperature in 15 hours.

### Example 8

### Bis[2-(benzylamidopyridine]trichlorotantalum(V) [TaCl₃(PyNBz)₂]

Tantalum(V)chloride, 1.36 g (3,89 mmol) and 2-(benzylamino)pyridine (Mp 95-97 C), 1.47 g (7.97 mmol) where heated at 100 °C. Melt started to red immediately. After one hour 30 ml of toluene was added, the solution was refluxed for 2 hours, and filtered when hot trough Celite. Solution was kept at room temperature and a few drops of n-hexane was added to the solution. Intense red crystalline blocks were obtained in 20 hours. Estimated yield was 50-55 %.

### Example 9

### Bis[2-(benzylamido)-4-methylpyridine]trichlorotantalum(V) [TaCl₃(4-MePyNBz)₂]

The title compound was prepared analoguously to Example 8, but at the temperature of 80 °C.

### Example 10

### Trichloro-2-(phenylamido)pyridineoxotungsten(VI) [WCl₃O(PhNPy)]

2-(Phenylamino)pyridine (4.10 g, 24.1 mmol) and tungsten (VI)-oxo-tetrachloride (3.20 g, 9.38 mmol) were heated in toluene (50 ml) suspension for 90 minutes at 80 °C. Solution was then filtered and evaporated to reduced volume (30 ml). Large black crystalline blocks with average size over 1 mm in each dimension were obtained at room temperature in 10 hours.

### Example 11

The compound prepared in Example 8 (Catalyst A) and compound prepared in Example 4 (Catalyst B) as toluene solvates were tested for ethylene polymerization. The catalysts were weighed to the polymerization reactor, where also methylaluminiumoxane (MAO) was added as cocatalyst so that Al/Ta (Al as MAO) ratio was 2000 mol/mol. The polymerization was carried out in 300 ml toluene. Ethylene pressure was 5.10⁵ Pa (5 bar). The polymerization conditions and results are presented in the following table.

**Table**

| Cat. | Amount mg | T °C | Time min | Yield g | Activity kgPE/ molTa/h | M_{w} g/mol | M_{w}/Mₙ | Tₘ °C |
|---|---|---|---|---|---|---|---|---|
| A | 10.0 | 30 | 20 | 3.7 | 800 | 201200 | 2.5 | 137.7 |
| A | 5.0 | 60 | 7 | 3.9 | 5000 | 93800 | 2.0 | 135.4 |
| A | 2.0 | 60 | 30 | 2.5 | 1900 | 84900 | 1.9 | 135.3 |
| A | 1.0 | 60 | 30 | 1.0 | 1500 | 82800 | 1.9 | 134.8 |
| B | 5.0 | 60 | 7 | 5.0 | 7700 | 90700 | 1.9 | 134.8 |
| B | 2.0 | 60 | 7 | 2.5 | 9600 | 86500 | 1.9 | 134.7 |
| R | 1.0 | 60 | 30 | 3.2 | 5800 | 84500 | 1.9 | 135.3 |
| B | 1.0 | 80 | 7 | 3.1 | 23900 | 66100 | 1.8 | 133.9 |
| B | 1.0 | 30 | 30 | 0.5 | 900 | 115400 | 1.9 | 136.3 |

## Claims

1. A catalyst system for homo or copolymerizing ethylenically unsaturated monomers, **characterized in that** it comprises
A) a transition metal complex having a general formula (I):
M(RNpy)_{y}X_{z} (I)
where
M is a transition metal selected from groups IVb-VIb of The Periodic Chart of the Elements,
RNpy is unsubstituted or substituted amidopyridine derivative,
X is a ligand having a valency of 1, and
y is 1-4, z is 0-5 and y+z is 3-6, and
(B) an acceptor compound for component X as an activator.

2. A catalyst system according to claim 1, **characterized in that** the transition metal M is selected from Ti, Zr, Hf, V, Nb, Ta, Cr or W.

3. A catalyst system according to claims 1 or 2, **characterized in that** X is selected from chloride, bromide, iodine,fluoride or oxy derivative thereof.

4. A catalyst system according to claim 1, **characterized in that** component (A) has a general formula (II): 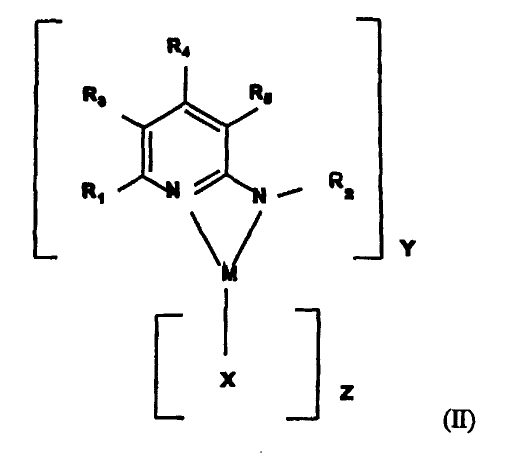 where
R₂ is selected from hydrogen or linear, branched or cyclic C₁-C₂₅ alkyl group or cyclic C₁-C₇ group connected to groups R₁, R₃, R₄ or R₅ as defined below, or silyl alkyl SiRR'R"' or boron alkyl BRR' where R, R' and R" are as defined for R₁, R₃, R₄ and R₅,
R₁, R₃, R₄ and R₅ are same or different groups selected from hydrogen, linear, branched or cyclic C₁-C₂₅ alkyl group, or a cyclic C₁-C₇ alkylene group connected to R₁, R2, R3, R₄ or R₅ , or substituted main group element (B, C, Si, N, O, P, As, Sb, Pb..) with a substituent as R₁-R₅,
M is a transition metal as defined above,
X groups are indeperidently halide and/or oxo group or alkyl as R₂, or -NRR' where R and R' are as R₂ defined above, and X can also act as a bridge between two or more M(RNpy)_{y}X_{z-1} units.
y is 1-4, z is 0-5 and y+z is 3-6.

5. A catalyst system according to claim 4, **characterized in that** X is selected from chloride, bromide, iodine, fluoride or oxy derivative thereof.

6. A catalyst system according to claims 1-5, **characterized in that** component (B) is an organometal compound, preferably organoaluminium compound.

7. A catalyst system according to claim 6,
**characterized in that** component (B) is an alumoxane compound having the formula of R-(A1(R)-O)ₙ-Al(R)₂ where n is 1-40 and R is C₁-C₈ alkyl group.

8. A catalyst system according to claim 7,
**characterized in that** R is a methyl group.

9. A method for homo or copolymerization of ethylenically unsaturated monomer in the presence of a catalyst system according to claims 1-8.

10. A method according to claim 9, **characterized in that** the catalyst system is used as a homogenous system or supported on inorganic or organic carrier.

11. A method according to claim 9 or 10, **characterized in that** the monomer is one or more monomer selected from ethylene, propylene, butene, pentene, hexene, 4-methyl-1-pentene, cycloolefins like norbornene and dienes like butadiene, 1-4-hexadiene or 1,5-hexadiene.

12. A method according to claims 9-11, **characterized in that** it is carried out at polymerization temperatures from 0 to 150 C, preferably 50-110 C, and pressures up to 10⁸ Pa (1000 bar), preferably 5.10⁵ - 7.10⁶ Pa (5-70 bar) according to a slurry, gas phase or solution process.

## Patentansprüche

1. Katalysatorsystem für die Homo- oder Copolymerisation von ethylenisch ungesättigten Monomeren, **dadurch gekennzeichnet, daß** es umfaßt:
A) einen Übergangsmetallkomplex mit der allgemeinen Formel (I):
M(RNpy)_{y}X_{z},
worin
M ein Übergangsmetall ist, das aus den Gruppen IVb - VIb des Periodensystems der Elemente ausgewählt ist,
RNpy ein unsubstituiertes oder substituiertes Amidopyridin-Derivat ist,
X ein Ligand mit der Wertigkeit 1 ist und
y 1 bis 4, z 0 bis 5 und y + z 3 bis 6 sind, und
B) eine Akzeptorverbindung für die Komponente X als Aktivator.

2. Katalysatorsystem nach Anspruch 1, **dadurch gekennzeichnet, daß** das Übergangsmetall M aus Ti, Zr, Hf, V, Nb, Ta, Cr oder W ausgewählt ist.

3. Katalysatorsystem nach Anspruch 1 oder 2, **dadurch gekennzeichnet, daß** X aus Chlorid, Bromid, Iod, Fluorid oder einem Oxy-Derivat davon ausgewählt ist.

4. Katalysatorsystem nach Anspruch 1, **dadurch gekennzeichnet, daß** die Komponente (A) die allgemeine Formel (II) hat: 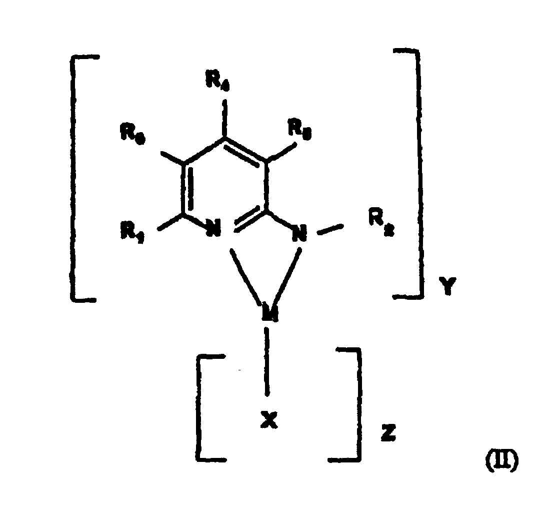 worin
R₂ aus Wasserstoff oder einer linearen, verzweigten oder cyclischen C₁-C₂₅-Alkylgruppe oder cyclischen C₁-C₇-Gruppe, die mit den wie nachstehend definierten Gruppen R₁, R₃, R₄ oder R₅ verbunden ist, oder Silylalkyl SiRR'R"' oder Boralkyl BRR' ausgewählt ist, wobei R, R' und R" wie für R₁, R₃, R₄ und R₅ definiert sind,
R₁, R₃, R₄ und R₅ gleiche oder verschiedene Gruppen sind, die aus Wasserstoff, einer linearen, verzweigten oder cyclischen C₁-C₂₅-Alkylgruppe oder cyclischen C₁-C₇-Alkylengruppe, die mit R₁, R₂, R₃, R₄ oder R₅ verbunden ist, oder einem substituierten Element aus der Hauptgruppe (B, C, Si, N, O, P, As, Sb, Pb...) mit einem Substituenten wie R₁ - R₅ ausgewählt sind,
M ein Übergangsmetall wie vorstehend definiert ist,
die Gruppen X unabhängig eine Halogenid- und/oder Oxogruppe oder Alkyl wie R₂ oder -NRR' sind, wobei R und R' wie R₂ sind, wie vorstehend definiert, und X auch als Überbrückung zwischen 2 oder mehr M(RNpy)_{y}X_{z-1}-Einheiten wirken kann,
y 1 bis 4, z 0 bis 5 und y + z 3 bis 6 sind.

5. Katalysatorsystem nach Anspruch 4, **dadurch gekennzeichnet, daß** X aus Chlorid, Bromid, Iod, Fluorid oder einem Oxy-Derivat davon ausgewählt ist.

6. Katalysatorsystem nach den Ansprüchen 1 bis 5, **dadurch gekennzeichnet, daß** die Komponente (B) eine Organometallverbindung, vorzugsweise eine Organoaluminiumverbidung, ist.

7. Katalysatorsystem nach Anspruch 6, **dadurch gekennzeichnet, daß** die Komponente (B) eine Alumoxanverbindung mit der Formel R-(Al(R)-O)ₙ-Al(R)₂ ist, worin n 1 bis 40 ist und R eine C₁-C₈-Alkylgruppe ist..

8. Katalysatorsystem nach Anspruch 7, **dadurch gekennzeichnet, daß** R eine Methylgruppe ist.

9. Verfahren zur Homo- oder Copolymerisation eines ethylenisch ungesättigten Monomers in Gegenwart eines Katalysatorsystems nach den Ansprüchen 1 bis 8

10. Verfahren nach Anspruch 9, **dadurch gekennzeichnet, daß** das Katalysatorsystem als homogenes System oder auf einem anorganischen oder organischen Träger getragen verwendet wird.

11. Verfahren nach Anspruch 9 oder 10, **dadurch gekennzeichnet, daß** das Monomer ein oder mehrere Monomere, ausgewählt aus Ethylen, Propylen, Buten, Penten, Hexen, 4-Methyl-1-penten, Cycloolefinen, wie Norbornen, und Dienen, wie Butadien, 1,4-Hexadien oder 1,5-Hexadien, ist.

12. Verfahren nach den Ansprüchen 9 bis 11, **dadurch gekennzeichnet, daß** es bei Polymerisationstemperaturen von 0 bis 150°C, vorzugsweise 50 bis 110°C, und einem Druck von bis zu 10⁸ Pa (1000 bar), vorzugsweise 5•10⁵ bis 7•10⁶ Pa, nach einem Suspensions-, Gasphasen- oder Lösungsverfahren durchgeführt wird.

## Revendications

1. Système de catalyseur pour l'homopolymérisation ou la copolymérisation de monomères à insaturation éthylénique, **caractérisé en ce qu'**il comprend
A) un complexe de métal de transition de formule générale (I) :
M(RNpy)_{y}X_{z} (I)
dans laquelle
M est un métal de transition choisi parmi les Groupes IVb-VIb du Tableau périodique des Eléments,
RNpy est un dérivé d'amidopyridine non substitué ou substitué,
X est un ligand ayant une valence de 1, et
y vaut 1-4, z vaut 0-5 et y+z vaut 3-6, et
B) un composé accepteur pour le composant X comme activateur.

2. Système de catalyseur selon la revendication 1, **caractérisé en ce que** le métal de transition M est choisi parmi Ti, Zr, Hf, V, Nb, Ta, Cr ou W.

3. Système de catalyseur selon la revendication 1 ou 2, **caractérisé en ce que** X est choisi parmi le chlorure, le bromure, l'iode, le fluorure ou leurs dérivés oxy.

4. Système de catalyseur selon la revendication 1, **caractérisé en ce que** le composant (A) répond à la formule générale (II) : 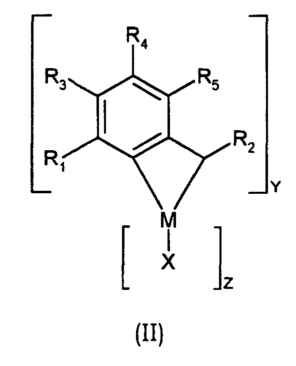 dans laquelle
R₂ est choisi parmi l'hydrogène, ou un groupe alkyle en C₁ - C₂₅ linéaire ramifié ou cyclique, ou un groupe cyclique en C₁ - C₇ connecté aux groupes R₁, R₃, R₄ ou R₅ tels que définis ci-dessous, ou silylalkyl-SiRR'R" ou boroalkyl BRR' où R, R' et R" sont tels que définis pour R₁, R₃, R₄ et R₅ ;
R₁, R₃, R₄ et R₅ sont des groupes identiques ou différents choisis parmi l'hydrogène, un groupe alkyle en C₁ - C₂₅ linéaire, ramifié ou cyclique, ou un groupe alkylène cyclique en C₁ - C₇ connecté à R₁, R₂, R₃, R₄ ou R₅, ou un élément de groupe principal substitué (B, C, Si, N, O, P, As, Sb, Pb ...) avec un substituant tel que R₁-R₅,
M est un métal de transition tel que défini ci-dessus,
les groupes X sont indépendamment un halogénure et/ou un groupe oxo ou alkyle comme R₂, ou -NRR' ou R et R' sont comme R₂ défini ci-dessus, et X peut aussi agir comme un pont entre deux motifs M(RNpy)_{y}X_{z-1} ou plus,
y vaut 1-4, z vaut 0-5 et y+z vaut 3-6.

5. Système de catalyseur selon la revendication 4, **caractérisé en ce que** X est choisi parmi le chlorure, le bromure, l'iode, le fluorure ou leurs dérivés oxy.

6. Système de catalyseur selon les revendications 1-5, **caractérisé en ce que** le composant (B) est un composé organométallique, de préférence un composé organique de l'aluminium.

7. Système de catalyseur selon la revendication 6, **caractérisé en ce que** le composant (B) est un composé alumoxane de formule R-(Al(R)-O)ₙ-Al(R)₂ où n vaut 1-40 et R est un groupe alkyle en C₁ - C₈.

8. Système de catalyseur selon la revendication 7, **caractérisé en ce que** R est un groupe méthyle.

9. Procédé pour l'homopolymérisation ou la copolymérisation de monomère à insaturation éthylénique en présence d'un système de catalyseur selon les revendications 1-8.

10. Procédé selon la revendication 9, **caractérisé en ce que** le système de catalyseur est utilisé sous forme d'un système homogène ou supporté sur un support minéral ou organique.

11. Procédé selon la revendication 9 ou 10, **caractérisé en ce que** le monomère est choisi parmi l'éthylène, le propylène, le butène, le pentène, l'hexène, le 4-méthyl-1-pentène, les cyclooléfines telles que le norbornène et les diènes tels que le butadiène, le 1,4-hexadiène et le 1,5-hexadiène.

12. Procédé selon les revendications 9-11, **caractérisé en ce qu'**il est mis en oeuvre à des températures de polymérisation de 0 à 150°C, de préférence de 50-110°C, et sous des pressions allant jusqu'à 10⁸ Pa (1000 bar), de préférence 5.10⁵-7.10⁶ Pa (5-70 bar) conformément à un procédé en suspension, en phase gazeuse ou en solution.
